# FASCICULE DE BREVET EUROPEEN

(11) **EP 1 019 201 B1**
(45) Date de publication et mention de la délivrance du brevet: **28.11.2001**
(21) Numéro de dépôt: 98946535.6
(22) Date de dépôt: 30.09.1998
(51) Int. Cl.: B07B 1/42, B07B 1/50

(54) **DISPOSITIF D'ASSISTANCE AU TAMISAGE ET AU DECOLMATAGE A STRUCTURE VIBRANTE ULTRA-SONORE ET INSTALLATION DE TAMISAGE EQUIPEE D'UN TEL DISPOSITIF**
HILFSVORRICHTUNG ZUM SIEBEN UND REINIGEN MIT EINER MIT ULTRASCHALL SCHWINGENDEN STRUKTUR UND EINE MIT EINER SOLCHEN VORRICHTUNG VERSEHENE SIEBANLAGE
ASSISTANCE DEVICE FOR SCREENING AND DECLOGGING WITH ULTRASOUND VIBRATING STRUCTURE AND SCREENING INSTALLATION EQUIPPED THEREWITH

(30) Priorité: 30.09.1997 FR 9712393
(43) Date de publication de la demande: 19.07.2000
(73) Titulaire: Sinaptec, 59260 Lezennes (FR)
(72) Inventeur: TIERCE, Pascal, F-59910 Bondues (FR)
(74) Mandataire: Hennion, Jean-Claude
(86) Numéro de dépôt international: FR9802095
(87) Numéro de publication internationale: WO9916558

(56) Documents cités:
- WO-A-94/27748
- WO-A-96/29156
- DE-A- 4 340 948

## Description

La présente invention concerne un dispositif d'assistance au tamisage et au décolmatage de la toile d'un tamis. Elle concerne plus particulièrement un dispositif de ce type qui comporte une structure vibrante mise en vibration par un générateur d'ondes, notamment ultra-sonores, ladite structure étant en contact avec la toile du tamis.

La mise en oeuvre de tamis pour la séparation de poudres de plus en plus fines augmente de manière conséquente les risques de colmatage, la tension de surface de telles poudres provoquant l'adhésion de celles-ci sur les mailles de la toile et donc un encrassement rapide de celle-ci.

On a déjà proposé des dispositifs d'assistance au tamisage et au décolmatage dans lesquels une structure vibrante, mise en vibration par un générateur d'ondes ultra-sonores, applique à la toile du tamis des vibrations à très haute fréquence, ce qui permet d'améliorer sensiblement le débit d'écoulement des poudres sur le tamis tout en assurant un nettoyage permanent de la toile. Ce générateur d'ondes ultra-sonores comprend de manière usuelle un transducteur (convertisseur électromécanique) alimenté par un générateur électronique.

Dans l'un des premiers dispositifs de ce type proposés , la mise en vibration ultra-sonore est réalisée à l'aide d'un transducteur, placé au centre de la toile et collé sur celle-ci à l'aide d'une pièce d'adaptation particulière. L'efficacité d'un tel dispositif est faible sur les bords du tamis dans la mesure où la vibration est limitée au voisinage de la pièce d'adaptation. Cet inconvénient est rédhibitoire pour les tamis de grand diamètre.

Dans le document EP.652.810, la structure vibrante se présente sous la forme d'un anneau de section carrée ou rectangulaire qui est collé sur la toile du tamis. Pour obtenir la mise en vibration de cet anneau ,il a fallu mettre en oeuvre une pièce spécifique entre le transducteur du générateur d'ondes ultra-sonores et l'anneau, à savoir un résonateur qui est accordé à la fréquence du transducteur du générateur d'ondes. Selon le demandeur, l'inconvénient de cette solution réside dans la nécessité de mettre en oeuvre cette pièce spécifique et dans le fait que la forme carrée ou rectangulaire de l'anneau n'est pas propice à la propagation optimale des ondes ultra-sonores.

Le but visé par le demandeur est de proposer un dispositif d'assistance au tamisage et au décolmatage de la toile d'un tamis qui pallie l'inconvénient précité en ce qu'il optimise la propagation des ondes ultra-sonores sans nécessiter la mise en oeuvre d'une pièce spécifique.

Ce but est parfaitement atteint par le dispositif de l'invention qui de manière connue comprend une structure vibrante qui est en contact avec la toile du tamis et qui est mise en vibration par un générateur d'ondes, notamment ultra-sonores, ladite structure vibrante consistant en une pièce ayant une base dont la face inférieure est raccordée audit générateur. De manière caractéristique, selon l'invention, ladite pièce a, : un épaulement dont au moins une extrémité est en contact solidaire avec la toile. De plus les rapports de dimension de ladite pièce, notamment l'épaisseur e1 de l'épaulement par rapport à l'épaisseur e2 de la base et la largeur I1 de l'épaulement par rapport à la largeur totale I2 de la pièce au niveau de l'épaulement étant choisis en sorte d'amplifier le mouvement vibratoire de l'extrémité 10 de la pièce 4 par rapport aux mouvements produits par le générateur d'ondes 7a.

L'excitation de la base par le générateur d'ondes induit un mouvement de flexion de l'extrémité de l'épaulement. On dénomme sous le terme "extrémité de l'épaulement" une quelconque partie de l'épaulement qui se trouve à l'opposé de la base, cette partie pouvant être sur la face supérieure, sur le chant ou sur la face inférieure de l'épaulement. Ainsi la configuration particulière de la structure vibrante permet de transformer le mouvement qui est dirigé selon l'axe du générateur d'ondes en un mouvement qui met en vibration l'épaulement selon un mode en flexion.

Selon le demandeur ce mode en flexion présente beaucoup d'avantages. Par le choix judicieux des rapports de dimension de l'épaulement, le mouvement vibratoire de l'extrémité de l'épaulement est amplifié de manière optimale par rapport au mouvement produit par le générateur d'ondes ultra-sonores au niveau de la face inférieure de la base.

Dans une première variante préférée de réalisation, c'est la face supérieure de la pièce, incluant l'épaulement , qui est en contact solidaire avec la toile.

Le mouvement en flexion agit dans la direction perpendiculaire au plan général de la toile, il n'apporte pas de contraintes sur les mailles de celle-ci et limite considérablement le risque de rupture de la toile.

Enfin, lorsque la structure vibrante se présente sous une forme annulaire, le diamètre de cette structure n'a pas d'influencé directe sur la vibration, ce qui permet de réaliser des structures annulaires d'un diamètre quelconque.

Lorsque la structure vibrante présente , en section,cette forme en L retourné, l'excitation vibratoire en flexion de la toile s'effectue uniquement selon le côté de celle-ci qui s'étend au-delà de l'épaulement.

Avantageusement, la structure vibrante comporte deux épaulements , dont les faces supérieures sont en contact solidaire avec la toile et qui débordent de part et d'autre de la base. Dans ces conditions, cette structure présente, en section, une forme en T, ce qui permet d'obtenir une excitation vibratoire de la toile de part et d'autre de la structure vibrante et non d'un seul côté.

Cette structure particulière , en forme de T, présente un avantage significatif du fait qu'elle rend possible toute sorte de combinaisons en choisissant de manière adéquate les longueurs et épaisseurs de chacun des deux épaulements latéraux.

Par exemple, il est possible de déterminer la longueur L1 du premier épaulement en sorte que celui-ci vibre à une fréquence f1 et la longueur L2 du second épaulement en sorte que celui-ci vibre à une fréquence f2. Selon ce mode particulier de réalisation , il devient possible de choisir alternativement la fréquence f1 ou f2 au niveau du générateur d'ondes, en réglant par exemple la fréquence du générateur électronique de ce générateur d'ondes, de manière à ce que les épaulements soient mis en vibration de manière indépendante. Ceci permet d'agir de manière séquentielle sur les différentes zones de la toile.

Selon l'invention, la structure vibrante peut être adaptée à toute configuration de tamis. Dans un premier mode de réalisation, destiné à équiper principalement des tamis circulaires , la base se présente sous la forme d'une barre annulaire. Avantageusement, l'installation de tamisage comporte alors au moins deux dispositifs selon l'invention qui sont montés concentriquement par rapport au tamis.

Selon un autre mode de réalisation , destiné principalement aux tamis rectangulaires, la base se présente sous la forme d'une barre rectiligne. Avantageusement l'installation de tamisage comporte alors au moins deux dispositifs selon l'invention qui sont montés parallèlement ou perpendiculairement l'un par rapport à l'autre.

Dans un autre mode de réalisation , la base se présente sous la forme d'un cylindre. Dans ce cas la partie supérieure du cylindre est prolongée par un épaulement unique de forme globalement circulaire. Cette variante particulière de réalisation peut valablement équiper un tamis de petite dimension ou se combiner avec un ou plusieurs autres dispositifs selon l'invention dont la base se présente sous la forme d'une barre annulaire.

Dans une seconde variante préférée de réalisation, c'est le chant de l'extrémité de l'épaulement qui est en contact solidaire avec la toile. Avantageusement, dans ce cas , la pièce comporte deux prolongements latéraux dudit chant qui augmente la surface de contact entre la pièce et le tamis , ce qui notamment facilite la solidarisation par collage.

La présente invention sera mieux comprise à la lecture de la description qui va être faite de plusieurs exemples de réalisation d'installations de tamisage équipées de dispositif d'assistance à structure vibrante , dans lesquelles :
- La figure 1 est une représentation schématique en coupe d'une structure vibrante en L retourné dont la face supérieure est en contact solidaire avec la toile du tamis,
- La figure 2 est une représentation schématique en coupe d'une structure vibrante en T dont la face supérieure est en contact solidaire avec la toile du tamis,
- La figure 3 est une représentation schématique en perspective d'un tamis circulaire équipé de deux structures vibrantes annulaires,
- La figure 4 est une représentation schématique en perspective d'un tamis rectangulaire équipé de trois structures vibrantes rectilignes,
- et la figure 5 est une représentation en coupe d'une installation de tamisage équipée d'une structure vibrante annulaire en L retourné dont le chant de l'extrémité de l'épaulement est en contact solidaire avec la toile du tamis.

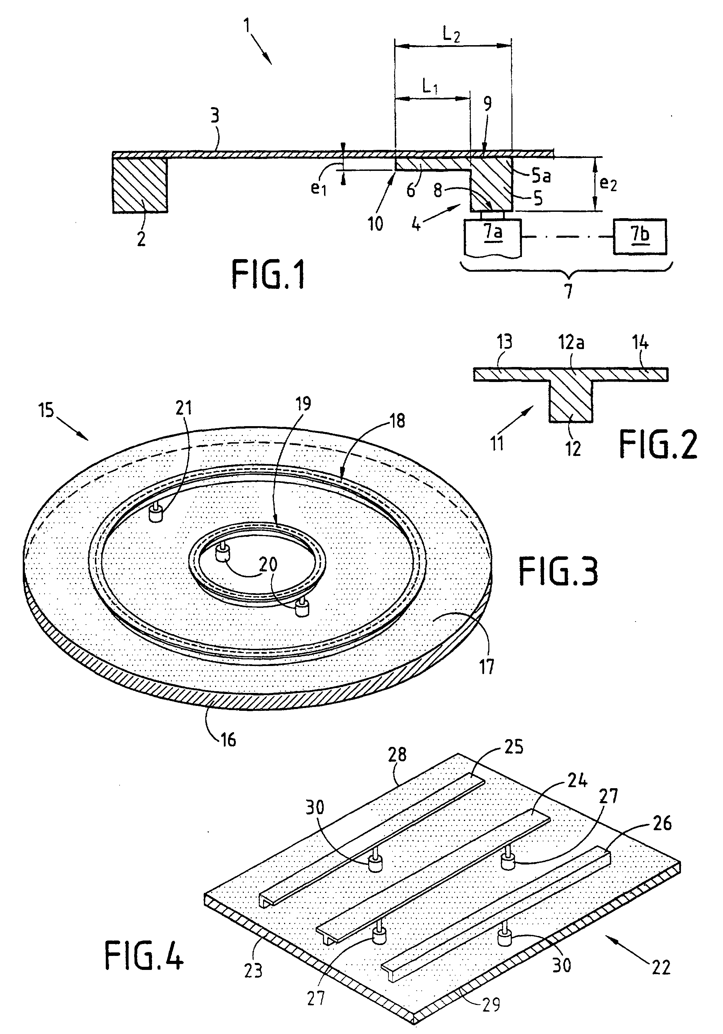

L'installation de tamisage 1 très partiellement représentée sur la figure 1 comporte un cadre 2 qui sert de support à une toile 3. La toile 3 est fixée sur le cadre 2 à l'état tendu par tout moyen approprié. La toile de tamisage 3 est par exemple constituée de fils entrecroisés délimitant entre eux des espaces vides dont les dimensions correspondent au calibre du tamis. L'installation 1 comprend une carcasse vibrante non représentée, elle-même supportée par un châssis. Le mouvement vibratoire appliqué sur le cadre 2 par la carcasse vibrante assure le brassage des matériaux pulvérulents en sorte de faciliter le passage à travers les mailles de la toile 3 des produits ayant une taille inférieure au calibre de la toile et également la circulation des produits de taille plus importante restant au-dessus de la toile.

L'installation de tamisage 1 comprend également un dispositif d'assistance au tamisage et au décolmatage mettant en oeuvre une structure vibrante mise en vibration par un générateur d'onde à très hautes fréquences, notamment ultrasonores, ladite structure vibrante étant en contact solidaire avec la toile 3 du tamis. Cette vibration à très hautes fréquences vient se superposer à la vibration mécanique de la toile de tamisage générée par la carcasse vibrante ; elle est destinée à conférer aux particules qui adhèrent naturellement aux fils de la toile une accélération apte à les décrocher et donc à éviter l'encrassage de ladite toile.

De manière caractéristique, selon l'invention, la structure vibrante est une pièce 4 ayant , en section , la forme d'un L retourné avec une base 5 constituant le corps principal de la pièce 4 et un épaulement 6 prolongeant latéralement la partie supérieure 5a de la base 5. Un générateur 7 d'ondes à très hautes fréquences, notamment ultra-sonores, est raccordé à la pièce 4 au niveau de la face inférieure 8 de la base 5, par exemple à l'aide d'un goujon non représenté. Ce générateur comprend un transducteur 7a qui est alimenté par un générateur électronique 7b, et qui a pour fonction de convertir en vibrations mécaniques le signal d'alimentation électrique délivré par le générateur électronique.

L'excitation de la base 5 par le transducteur 7a induit un mouvement de flexion de l'épaulement 6, particulièrement important au niveau de l'extrémité 10 dudit épaulement . Il est de ce fait possible d'amplifier dans des proportions importantes le mouvement vibratoire de ladite extrémité 10 par rapport au mouvement produit par le transducteur 7a; en choisissant judicieusement les rapports de dimension de la pièce 4, notamment l'épaisseur e₁ de l'épaulement par rapport à l'épaisseur e₂ de la base et la largeur I₁ de l'épaulement par rapport à la largeur totale I₂ de la pièce 4 au niveau de l'épaulement 6.

Dans la première variante préférée de réalisation illustrée à la figure 1, la face supérieure 9 de la pièce 4, incluant à la fois la partie supérieure 5a de la base 5 et l'épaulement 6 est en contact solidaire avec la toile 3. Ce contact solidaire peut être obtenu par tout moyen approprié, collage, soudage ou brasage.

Dans cette structure , la pièce vibrante 4 permet d'exciter la toile sur un seul côté s'étendant au-delà de l'épaulement 6 par rapport à la base 5.

Dans l'exemple de réalisation qui est illustré à la figure 2, la pièce 11 a , en section, une forme en T avec la base 12 qui est prolongée dans sa partie supérieure 12a par deux épaulements 13,14. L'excitation de la base 12 par le générateur d'ondes induit un mouvement de flexion des deux épaulements 13,14. Ainsi il est possible d'exciter la toile sur les deux côtés de la pièce 11 s'étendant au-delà des épaulements 13,14.

Sur la figure 2, on a représenté des épaulements 13,14, parfaitement symétriques , ayant la même longueur et la même épaisseur. Il est cependant possible de disposer de part et d'autre de la base 12 des épaulements ayant des longueurs et/ou des épaisseurs différentes , de manière à créer de part et d'autre de la base 12 des mouvements d'amplitude différente voire même réagissant à des fréquences différentes. Ainsi, grâce à cette structure particulière de l'invention, il est possible de mettre en vibration de façon indépendante chacun des épaulements 13,14, ce qui permet de ne faire fonctionner, à un moment donné, qu'une partie du tamis. Il suffit pour ce faire de choisir pour le premier épaulement 13 une longueur L₁ apte à vibrer à la fréquence f1 et pour le second épaulement 14 une longueur L₂ apte à vibrer à la fréquence f2. La sélection, au niveau du générateur 7, de la fréquence de fonctionnement, f1 ou f2, permet de mettre en vibration l'un ou l'autre des deux épaulements 13,14. Cette sélection est réalisée en réglant par exemple la fréquence du générateur électronique 7b.

Ce même principe de mise en vibration de façon indépendante des épaulements de longueurs différentes en fonction de fréquences déterminées peut également s'appliquer en adoptant pour la pièce vibrante des zones distinctes avec une longueur de l'épaulement (structure en L retourné) ou des épaulements (structure en T) différente d'une zone à l'autre. Cette configuration particulière d'une pièce vibrante ayant des zones distinctes sur toute sa longueur aptes à vibrer à des fréquences variables est particulièrement adaptée aux pièces vibrantes de forme rectiligne.

Par ailleurs il serait envisageable , notamment pour réduire la longueur des épaulements tout en conservant une très bonne amplification du mouvement en flexion, d'augmenter localement l'épaisseur de l'épaulement 6 vers son extrémité 10 opposée à la base 5. Cette surépaisseur localisée constituerait alors une masse d'inertie.

La pièce vibrante 4,11 peut adopter des configurations différentes, suivant que la base 5, 12 se présente sous la forme d'une barre rectiligne, annulaire ou d'un cylindre.

A la figure 3, on a représenté un mode de réalisation d'une installation de tamisage 15 comprenant , montée sur un cadre 16, une toile 17 , sous laquelle sont disposées, en contact solidaire avec la toile 17, deux pièces vibrantes 18,19 dont la base est constituée d'une barre annulaire de diamètre différent , montée concentriquement par rapport au cadre circulaire 16. Dans ce type de pièce vibrante 16,17, le mouvement de flexion des épaulements est indépendant du diamètre de la base annulaire, ce qui évite toute contrainte dans le choix de ce diamètre au regard de celui du tamis. Chacune des deux pièces vibrantes 18,19 est raccordée à un ou plusieurs générateurs d'ondes. Dans l'exemple illustré, la pièce vibrante 19 de plus petit diamètre est raccordée à deux transducteurs 20, tandis que la pièce vibrante 18 de plus grand diamètre est raccordée à un seul transducteur 21. Sur cette figure, les générateurs électroniques alimentant les transducteurs 20 et 21 n'ont pas été représentés. Les pièces vibrantes 18,19 peuvent être excitées ensemble ou de manière indépendante pour créer les mouvements adéquats sur la surface de la toile.

Sur la figure 4 on a illustré une installation de tamisage 22 dans laquelle le cadre 23 est rectangulaire et trois pièces vibrantes 24,25,26, dont la base est rectiligne, sont disposées parallèlement aux grands côtés du cadre 23. Plus précisément la pièce vibrante 24 dont la section est en forme de T est disposée de manière médiane selon l'axe de symétrie du cadre 23, étant raccordé à deux transducteurs 27 tandis que les deux autres pièces vibrantes 25,26 sont des pièces dont la section est en L retourné qui sont disposées à proximité immédiate des grands côtés 28,29 du cadre 23, les épaulements desdites pièces 25,26 étant tournées vers la pièce médiane 24. Les deux pièces latérales 25,26 sont raccordées à un seul transducteur 30. Sur cette figure, seuls les transducteurs 27 et 30 des générateurs d'ondes ont été représentés, les générateurs électroniques alimentant ces transducteurs 27 et 30 n'étant pas représentés.

Les deux modes de réalisation, illustrés aux figures 3 et 4 l'ont été à titre d'exemples non exhaustifs. Dans le cas de cadre de forme rectangulaire, il est possible de disposer des pièces vibrantes de forme générale rectiligne selon d'autres configurations que celle qui vient d'être décrite. Les pièces vibrantes rectilignes peuvent également être disposées perpendiculairement les une aux autres ou avoir une répartition angulaire différente.

Dans un autre mode de réalisation, la base de la pièce vibrante est cylindrique et l'épaulement latéral s'étend sur toute la périphérie dudit cylindre pour former une face supérieure de la pièce qui soit circulaire. Cette forme circulaire n'est pas exclusive, toute autre forme courbe pourrait être envisagée.

Il est à noter que pour la mise en oeuvre de l'invention, le générateur d'ondes , notamment ultra-sonores, est un générateur de conception tout-à-fait classique qui comprend principalement un élément transducteur ne nécessitant pas une adaptation particulière pour son raccordement sur la base de la pièce vibrante, et un générateur électronique alimentant le transducteur à une fréquence donnée. L'élément transducteur est disposé sur un ventre d'amplitude de la pièce vibrante.

Bien que ceci n'ait pas été explicitement décrit et représenté , on comprend que les pièces vibrantes doivent être bloquées en position par rapport au cadre du tamis. Ceci peut être obtenu de manière classique par des bras de fixation qui relient ponctuellement le cadre et la base de chacune des pièces vibrantes.

Grâce à la mise en oeuvre des pièces vibrantes de l'invention, à leur choix et à leur répartition, on obtient une excellente homogénéité de vibration sur la toile, n'induisant qu'une faible contrainte sur ladite toile.

Bien sûr le dispositif d'assistance au tamisage et au décolmatage, faisant l'objet de la présente invention, peut être installé sur des tamis mono ou multi-étages.

Il est à noter qu'un tel dispositif peut être utilisé dans une gamme de fréquence comprise entre 5kHz et 100kHz.

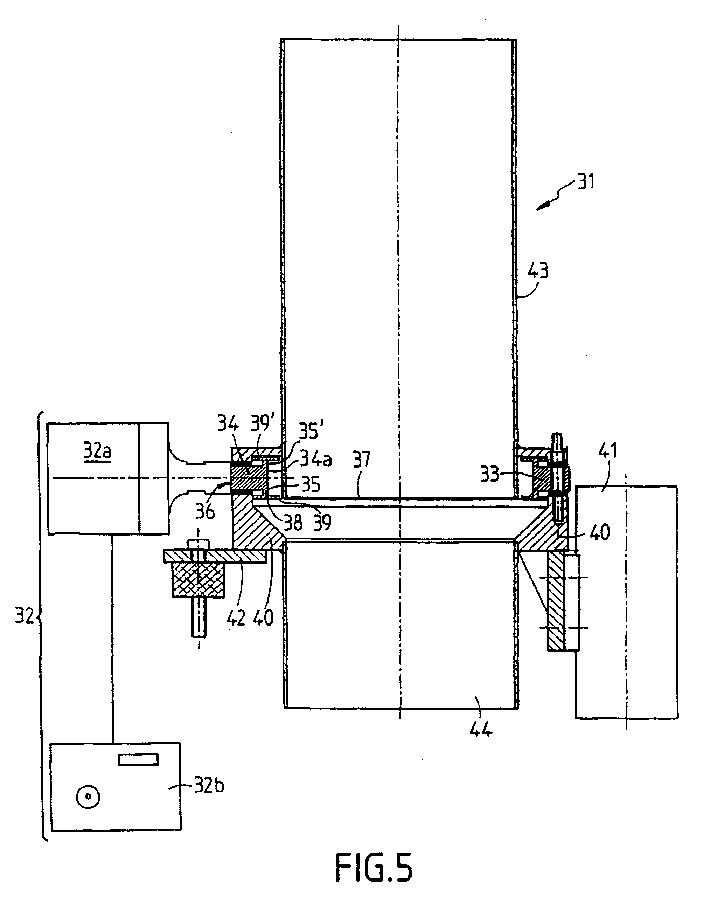

Sur la figure 5 on a représenté une installation de tamisage 31, de petite dimension, spécialement adaptée aux essais de laboratoire. Cette installation 31 comprend un dispositif d'assistance au tamisage et au décolmatage qui met en oeuvre une structure vibrante selon l'invention grâce à un générateur ultra-sonore 32 (transducteur 32a/générateur électronique 32b). La structure vibrante est une pièce annulaire 33 ayant , en section, la forme d'un T avec une base 34 constituant le corps principal de la pièce 33 et deux épauiements 35, 35' prolongeant latéralement la partie supérieure 34a de la base 34. Le transducteur 32a est raccordé à la pièce 33 au niveau de la face inférieure 36 de la base 34, à l'aide d'un goujon non représenté.

La toile 37 est solidaire de la pièce 34 par le chant 38 de l'un 35 des deux épaulements latéraux 35, 35'.

Dans l'exemple illustré , de manière à augmenter la surface de contact entre la toile 37 et le chant 38, ledit chant a été prolongé par deux prolongements latéraux 39. Ces deux prolongements latéraux constituent également une masse d'inertie permettant d'amplifier le mouvement de flexion de l'extrémité de l'épaulement 35 tout en ayant une longueur réduite pour ledit épaulement. La forme annulaire de la structure vibrante 33 n'est pas exclusive, toute autre forme courbe ou rectiligne pourrait être envisagée.

Pour des raisons d'homogénéité lors de la mise en vibration, la même structure a été adoptée pour le second épaulement 35' qui n'est pas en contact avec la toile 37. Il n'est toutefois pas indispensable que la structure vibrante 33 présente une section droite symétrique. Dans une autre variante, les prolongements latéraux 39' du second épaulement 35' pourraient être supprimés ; l'épaulement 35' pourrait également être supprimé.

Dans l'exemple illustré, c'est la pièce 33 qui fait office de cadre, servant de support à la toile 37. La pièce annulaire 33 est supportée et fixée au niveau de la partie inférieure de sa base 34 sur des montants 40 qui peuvent être mis en vibration par des moyens mécaniques traditionnels 41. Les montants 40 sont eux-mêmes supportés par un châssis fixe 42.

Un premier réceptacle cylindrique 43 est fixé aux montants 40 dans la zone intérieure de la pièce annulaire 43, au-dessus de la toile 37. Un second réceptacle 44 est fixé aux montants 40. Dans le prolongement du premier réceptacle 43, en-dessous de la toile 37 , avec une portion supérieure tronconique s'étendant sous la pièce annulaire 33, et formant entonnoir.

L'avantage de rendre la toile 37 solidaire non pas de la face supérieure de l'épaulement 35 de la pièce 33 (voir éventuellement de la face inférieure dudit épaulement 35) mais du chant 38 réside dans le fait que cette configuration permet de disposer le transducteur 32a du générateur 32 de manière décalée par rapport à la toile 37.

## Revendications

1. Dispositif d'assistance au tamisage et au décolmatage de la toile d'un tamis comprenant une structure vibrante qui est en contact avec la toile du tamis et qui est mise en vibration par un générateur d'ondes, notamment ultra sonore, ladite structure viorante consistant en une pièce (4, 33) ayant une base (5, 34) dont la face inférieure (8, 36) est raccordée au générateur (7, 32) **caractérisée en ce que** ladite pièce comporte un épaulement (6, 35) dont au moins l'extrémité est en contact solidaire avec la toile (3, 37), les rapports de dimension de ladite pièce, notamment l'épaisseur e1 de l'épaulement par rapport à l'épaisseur e2 de la base et la largeur I1 de l'épaulement par rapport à la largeur totale I2 de la pièce au niveau de l'épaulement étant choisis en sorte d'amplifier le mouvement vibratoire de l'extrémité 10 de la pièce 4 par rapport aux mouvements produits par le générateur d'ondes 7a.

2. Dispositif salon la revendication 1 **caractérisé en ce que** le chant (38) de l'épaulement (35) est en contact solidaire avec la toile (37).

3. Dispositif selon la revendication 2 **caractérisé en ce que** le chant (38) est pourvu de deux prolongements latéraux (39), en contact solidaire avec la toile (37).

4. Dispositif selon la revendication 1 **caractérisé en ce que** la face supérieure (9) de la pièce (4), incluant l'épaulement (6) est en contact solidaire avec la toile (3).

5. Dispositif selon la revendication 4 **caractérisé en ce que** la pièce (11) vibrante comporte deux épaulements (13,14), en contact solidaire avec la toile et qui débordent de part et d'autre de la base.

6. Dispositif selon la revendication 5 **caractérisé en ce que** la longueur L1 du premier épaulement (13) est telle que celui-ci vibre à une fréquence f1 et la longueur L2 du second épaulement (14) est telle que celui-ci vibre à une fréquence f2.

7. Dispositif selon l'une des revendications 4 à 6 **caractérisé en ce qu'**il comporte des zones distinctes, sur sa longueur, avec des longueurs d'épaulement différentes d'une zone à l'autre.

8. Dispositif selon l'une des revendications 4 à 7 **caractérisé en ce qu'**il comporte vers l'extrémité de l'épaulement une masse d'inertie, par exemple constituée par une surépaisseur de l'épaulement.

9. Dispositif selon l'une des revendications 1 à 8 **caractérisé en ce que** la base se présente sous la forme d'une barre annulaire.

10. Dispositif selon l'une des revendications 4 à 8 **caractérisé en ce que** la base se présente sous la forme d'une barre rectiligne

11. Dispositif selon la revendication 1 **caractérisé en ce que** la base se présente sous la forme d'un cylindre, et **en ce que** la partie supérieure du cylindre est prolongée par un épaulement unique de forme globalement circulaire.

12. Installation de tamisage comportant au moins deux dispositifs selon la revendication 9 montés concentriquement par rapport au tamis,

13. Installation de tamisage comportant au moins deux dispositifs selon la revendication 10 montés parallèlement ou perpendiculairement l'un par rapport à l'autre.

## Patentansprüche

1. Hilfs-Vorrichtung zum Sieben und Reinigen des Siebgeflechts eines Siebs, die eine Vibrations-Einrichtung umfasst, die mit dem Geflecht des Siebs in Kontakt steht und mittels eines Wellengenerators, insbesondere mittels UI-traschall, in Schwingungen versetzt wird, wobei die genannte Vibrations-Einrichtung aus einem Element (4, 33) besteht, das eine Basis (5, 34) aufweist, deren untere Fläche (8, 36) mit dem Generator (7, 32) verbunden ist, **dadurch gekennzeichnet, dass** das genannte Element mindestens eine Schulter (6, 35) aufweist, die an mindestens einem Ende mit dem Siebgeflecht (3, 37) in Solidar-Kontakt steht, wobei die Dimensionsverhältnisse des genannten Elements, insbesondere die Dicke e1 der Schulter im Verhältnis zur Dicke e2 der Basis und die Breite ℓ1 der Schulter im Verhältnis zur Gesamtbreite ℓ2 des Elements im Bereich der Schulter so gewählt werden, dass die Vibrationsbewegung des Endes 10 des Elements 4 im Verhältnis zu den von dem Wellengenerator 7a erzeugten Bewegungen verstärkt wird.

2. Vorrichtung nach Anspruch 1, **dadurch gekennzeichnet, dass** die Kante (38) der Schulter (35) mit dem Siebgeflecht (37) in Solidarkontakt steht.

3. Vorrichtung nach Anspruch 2, **dadurch gekennzeichnet, dass** die Kante (38) mit zwei seitlichen Verlängerungen (39) ausgestattet ist und in Solidarkontakt mit dem Siebgeflecht (37) steht.

4. Vorrichtung nach Anspruch 1, **dadurch gekennzeichnet, dass** die obere Oberfläche (9) des Elements (4) einschließlich der Schulter (6) in Solidarkontakt mit dem Siebgeflecht (37) steht.

5. Vorrichtung nach Anspruch 4, **dadurch gekennzeichnet, dass** das vibrierende Element (11) zwei Schultern (13, 14) aufweist, die mit dem Siebgeflecht in Solidarkontakt stehen und die beiderseits der Basis überstehen.

6. Vorrichtung nach Anspruch 5, **dadurch gekennzeichnet, dass** die Länge L1 der ersten Schulter (13) so ist, dass diese mit einer Frequenz f1 vibriert, und die Länge L2 der zweiten Schulter (14) so ist, dass diese mit einer Frequenz f2 vibriert.

7. Vorrichtung nach einem der Ansprüche 4 bis 6, **dadurch gekennzeichnet, dass** sie in Längsrichtung getrennte Zonen mit Schulterlängen aufweist, die von einer Zone zur anderen voneinander verschieden sind.

8. Vorrichtung nach einem der Ansprüche 4 bis 7, **dadurch gekennzeichnet, dass** sie am Ende der Schulter eine Trägheitsmasse aufweist, die beispielsweise aus einer übergroßen Dicke der Schulter besteht.

9. Vorrichtung nach einem der Ansprüche 1 bis 8, **dadurch gekennzeichnet, dass** die Basis in Form einer ringförmigen Stabes vorliegt.

10. Vorrichtung nach einem der Ansprüche 4 bis 8, **dadurch gekennzeichnet, dass** die Basis in Form einer geraden Stabes vorliegt.

11. Vorrichtung nach Anspruch 1, **dadurch gekennzeichnet, dass** die Basis in Form eines Zylinders vorliegt und dass der obere Abschnitt des Zylinders durch eine einzige Schulter mit einer allgemein kreisförmigen Form verlängert ist.

12. Siebanlage, die mindestens zwei Einrichtungen nach Anspruch 9 umfasst, die konzentrisch in bezug auf die Siebe zueinander angeordnet sind.

13. Siebanlage, die mindestens zwei Einrichtungen nach Anspruch 10 umfasst, die jeweils parallel oder senkrecht zueinander angeordnet sind.

## Claims

1. Assistance device for screening and declogging the screen cloth of a screen comprising a vibrating structure which is in contact with the screen cloth and which is set in vibration by a wave generator, in particular an ultrasound wave generator, said vibrating structure consisting of a part (4, 33) having a base (5, 34), the lower surface (8, 36) of which is connected to the generator (7, 32), **characterised in that** said part comprises a shoulder (6, 35) of which at least the end is in integral contact with the cloth (3, 37), the dimension ratios of said part, in particular the thickness e1 of the shoulder in relation to the thickness e2 of the base and the width 11 of the shoulder in relation to the total width 12 of the part at the level of the shoulder being selected so as to amplify the vibrating motion of the end 10 of the part 4 in relation to the motion produced by the wave generator 7a.

2. Device according to claim 1, **characterised in that** the edge (38) of the shoulder (35) is in integral contact with the cloth (37).

3. Device according to claim 2, **characterised in that** the edge (38) is provided with two lateral extensions (39), in integral contact with the cloth (37).

4. Device according to claim 1, **characterised in that** the upper surface (9) of the part (4), including the shoulder (6) is in integral contact with the cloth (3).

5. Device according to claim 4, **characterised in that** the vibrating part (11) comprises two shoulders (13, 14) in integral contact with the cloth and which overlap on either side of the base.

6. Device according to claim 5, **characterised in that** the length L1 of the first shoulder (13) is such that the latter vibrates at a frequency f1 and the length L2 of the second shoulder (14) is such that the latter vibrates at a frequency f2.

7. Device according to one of claims 4 to 6, **characterised in that** it comprises distinct zones, over its length, with different shoulder lengths from one zone to another.

8. Device according to one claims 4 to 7, **characterised in that** it comprises towards the end of the shoulder a centrifugal mass, for example constituted by an excessive thickness of the shoulder.

9. Device according to one of claims 1 to 8, **characterised in that** the base is in the shape of an annular bar.

10. Device according to one of claims 4 to 8, **characterised in that** the base is in the shape of a rectilinear bar.

11. Device according to claim 1, **characterised in that** the base is in the shape of a cylinder and **in that** the upper portion of the cylinder is extended by a single shoulder of overall circular shape.

12. Screening installation comprising at least two devices according to claim 9 mounted concentrically with respect to the screen.

13. Screening installation comprising at least two devices according to claim 10 mounted parallel or perpendicular to each other.
